# EUROPÄISCHE PATENTSCHRIFT

(11) **EP 2 870 209 B1**
(45) Veröffentlichungstag und Bekanntmachung des Hinweises auf die Patenterteilung: **21.02.2018**
(21) Anmeldenummer: 13733328.2
(22) Anmeldetag: 04.07.2013
(51) Int. Cl.: C08G 18/62, C08G 18/72, C08K 5/00, C09D 175/16, C09D 133/14, C08K 5/07, C08K 5/52, C09D 151/00, C08K 5/5333, C08K 5/5397

(54) **UV- UND THERMISCH HÄRTENDE KLARLACKZUSAMMENSETZUNG FÜR DIE KRAFTFAHRZEUG-REPARATURLACKIERUNG**
UV- AND THERMALLY-CURING CLEAR PAINT COMPOSITION FOR MOTOR VEHICLE REFINISHING PAINTING
LAQUE TRANSPARENTE DURCISSANT AUX UV ET THERMIQUEMENT POUR LA RETOUCHE DE PEINTURE DE VÉHICULES AUTOMOBILES

(30) Priorität: 04.07.2012 EP 12174887; 04.07.2012 US 201261667950 P
(43) Veröffentlichungstag der Anmeldung: 13.05.2015
(73) Patentinhaber: BASF Coatings GmbH, 48165 Münster (DE)
(72) Erfinder: RADEMACHER, Josef, 48165 Münster (DE); NIENHAUS, Egbert, 59387 Ascheberg (DE); SCHÖPS, Sibylle, 48165 Münster (DE); STEFFENS, Alexandra, 48161 Münster (DE)
(74) Vertreter: BASF IP Association
(86) Internationale Anmeldenummer: PCT/EP2013/064149
(87) Internationale Veröffentlichungsnummer: WO 2014/006142

(56) Entgegenhaltungen:
- EP-A1- 0 650 979
- EP-A1- 2 592 124
- WO-A1-01/46286
- WO-A1-03/000812
- DE-A1-102005 033 622

## Beschreibung

Die vorliegende Erfindung betrifft einen UV- und thermisch härtbaren lösemittelbasierten Klarlack, ein Modulsystem zu dessen Herstellung, ein in diesem als Hauptbindemittel verwendetes polyhydroxyfunktionelles Poly(meth)acrylat mit angepropften ungesättigten (Meth)acrylat-Seitenketten sowie ein Verfahren zur Herstellung einer Kraftfahrzeug-Reparaturklarlackierung (KFZ-Reparaturklarlackierung).

In Autoreparatur-Lackierbetrieben besteht ein Bedarf an der Bereitstellung von Klarlacken, die in möglichst kurzer Zeit soweit aushärten, dass die lackierte Karosserie beziehungsweise das lackierte Karosserieteil polierfähig ist. Da die zu lackierenden Substrate zumeist dreidimensional gebogene Oberflächen besitzen, ist eine Härtung der einzusetzenden Klarlacke alleine durch UV-härtende Systeme oft unzureichend. In einigen Bereichen der Substrate lässt sich eine gleichmäßige Bestrahlung nicht erreichen, so dass diese Bereiche nicht oder nur langsam härten. Um diesem Umstand Rechnung zu tragen, wurden in verschiedenen Anwendungsbereichen sogenannte Dual-Cure-Lacke entwickelt, also Lacke die sowohl strahlenhärtend als auch thermisch härtend sind.

Die EP 018880 A2 beschreibt beispielsweise Beschichtungsmittelzusammensetzungen für elektrische Schaltungen, welche nach dem Dual-Cure-Prinzip härten. Diese Zusammensetzungen umfassen bevorzugt 15 bis 45 Gewichtsprozent an multifunktionellen Alkenen, 25 bis 60 Gewichtsprozent an multifunktionellen Thiolen, 10 bis 50 Gewichtsprozent an multifunktionellen Isocyanaten und 0,5 bis 2,5 Gewichtsprozent an Photoinitiatoren. Die Anforderungen, welche insbesondere an KFZ-Lackierungen gestellt werden, können jedoch von diesen Formulierungen nicht erfüllt werden.

Aufgabe der vorliegenden Erfindung war es einen Klarlack bereitzustellen, der es erlaubt im Autoreparatur-Lackierbetrieb die Wartezeit nach der Applikation bis zur Polierfähigkeit des Lacks im Vergleich zu konventionellen Reparaturklarlacken des Stands der Technik drastisch zu senken, bei gleichzeitiger Senkung der thermischen Energiezufuhr aufgrund der kürzeren Trocknungszeit bis zur Polierfähigkeit. Mit einer raschen Polierfähigkeit verbunden, war es ein besonderes Ziel gerade auch in Schattenzonen des zu lackierenden zumeist dreidimensionalen Substrats eine rasche Härtung zu erhalten. Insbesondere sollte durch Bereitstellung eines derartigen Lacks die Produktivität des Lackierbetriebs gesteigert werden, um mehr Fahrzeuge in kürzerer Zeit lackieren zu können. Darüber hinaus sollen die erfindungsgemäßen Klarlacke Lackierungen liefern, die eine hohe Vergilbungsresistenz besitzen.

Überraschenderweise konnte die Aufgabe durch Bereitstellen eines UV- und thermisch härtenden lösemittelbasierten Klarlacks gelöst werden, enthaltend
(A) mindestens ein polyhydroxyfunktionelles Poly(meth)acrylat mit angepfropften ungesättigten (Meth)acrylat-Seitengruppen,
(B) mindestens ein polyisocyanatfunktionelles, mindestens zwei (Meth)acrylatGruppen enthaltendes aliphatisches Urethan,
(C) mindestens ein (meth)acrylatfunktionelles, von Isocyanatgruppen freies aliphatisches Urethan,
(D) mindestens eine hydroxyfunktionelle, (meth)acrylatfunktionelle, von Isocyanatgruppen und Urethangruppen freie aliphatische Komponente mit einem Molekulargewicht von maximal 1000 g/mol und einer (Meth)acrylatfunktionalität von mindestens 4, besser 5 oder 6,
(E) mindestens ein aliphatisches Polymercaptan,
(F) mindestens eine mit einem Amin blockierte Phosphorsäure oder Phosphonsäure, wobei das Amin einen pK_{b}-Wert von ≥ 3 und einen Siedepunkt bei Normaldruck von > 100 °C besitzt, und
(G) mindestens einen Photoinitiator gewählt aus der Gruppe bestehend aus α-Hydroxyalkylphenylketonen und Monoacylphosphinoxiden, wobei
   15 bis 33 Gew.-% an Komponente (A),
   5 bis 30 Gew.-% an Komponente (B),
   1 bis 9 Gew.-% an Komponente (C),
   3 bis 16 Gew.-% an Komponente (D),
   0,5 bis 25 Gew.-% an Komponente (E),
   0,009 bis 0,1 Gew.-% an Komponente (F) und
   0,03 bis 3,1 Gew.-% an Komponente (G), jeweils bezogen auf das Gesamtgewicht des Klarlacks, enthalten sind.

Wenn in dieser Schrift die Bezeichnung "(meth)acryl" verwendet wird, so steht diese Bezeichnung sowohl für "methacryl" als auch für "acryl". Im Zusammenhang mit Polymeren bedeutet dies, dass das Polymer methacrylfunktionelle Monomere, acrylfunktionelle Monomere oder beide enthält oder aus diesen erhalten wird. Unter "(Meth)acrylaten" werden "(Meth)acrylsäureester" verstanden.

### Komponente (A)

Das polyhydroxyfunktionelle Poly(meth)acrylat mit angepfropften ungesättigten (Meth)acrylat-Seitengruppen (A) ist vorzugsweise ein (Meth)acrylatcopolymerisat aus
(a) einem oder mehreren einfach ungesättigten Acrylat- und/oder Methacrylat-Monomeren und
(b) einem oder mehreren einfach ethylenisch ungesättigten aromatischen Monomeren,
wobei ein Teil der (a) Acrylat- und/oder Methacrylat-Monomere Hydroxylgruppen trägt und ein weiterer Teil der Acrylat- und/oder Methacrylat-Monomere Epoxy-Gruppen trägt, und wobei nach erfolgter Polymerisationsreaktion die Epoxygruppen, unter Erhalt der Kohlenstoff-Kohlenstoff-Doppelbindungen in der Acrylsäure und/oder Methacrylsäure, vollständig oder teilweise, vorzugsweise vollständig mit Acrylsäure und/oder Methacrylsäure umgesetzt werden. Hierbei resultieren polyhydroxyfunktionelle (meth)acrylierten Poly(meth)acrylate (A), die an der Poly(meth)acrylat-Hauptkette über eine Epoxy-Carboxyl-Reaktion angepfropfte (Meth)acrylat-Seitenketten tragen.

Die aus den Monomeren (a), (b) und gegebenenfalls weiteren einfach ethylenisch ungesättigten Monomeren (c) aufgebaute Hauptkette enthält vorzugsweise mindestens 50 Gew.-% an Monomeren (a) bezogen auf das Gesamtgewicht der die Hauptkette aufbauenden Monomere und vorzugsweise höchstens 50 Gew.-% an Monomeren (b) bezogen auf das Gesamtgewicht der die Hauptkette aufbauenden Monomere. Sollten weitere von (a) und (b) verschiedene einfach ethylenisch ungesättigte Monomere (c) enthalten sein, so beträgt deren Anteil vorzugsweise weniger als 10 Gew.-%, besonders bevorzugt weniger als 5 Gew.-% bezogen auf das Gesamtgewicht der die Hauptkette aufbauenden Monomere. Besonders bevorzugt sind solche polyhydroxyfunktionellen Poly(meth)acrylate mit angepfropften ungesättigten (Meth)acrylat-Seitengruppen (A) deren Hauptkette aus den Monomeren (a) und (b) besteht.

Der Anteil der Monomere (a) beträgt besonders bevorzugt 50 bis 70 Gew.-%, ganz besonders bevorzugt 55 bis 65 Gew.-% bezogen auf das Gesamtgewicht der die Hauptkette aufbauenden Monomere.

Der Anteil der Monomere (b) beträgt besonders bevorzugt 30 bis 50 Gew.-%, ganz besonders bevorzugt 35 bis 45 Gew.-% bezogen auf das Gesamtgewicht der die Hauptkette aufbauenden Monomere.

Die Monomere (a) bestehen aus Acrylat- und/oder Methacrylat-Monomeren, wobei der Anteil der Acrylatmonomere bezogen auf das Gesamtgewicht der Monomere (a) vorzugsweise 5 Gew.-% bis 25 Gew.-%, besonders bevorzugt 10 Gew.-% bis 22 Gew.-% und ganz besonders bevorzugt 15 Gew.% bis 20 Gew.-% beträgt.

Der Anteil der Methacrylatmonomere bezogen auf das Gesamtgewicht der Monomere (a) beträgt vorzugsweise 75 Gew.-% bis 95 Gew.-%, besonders bevorzugt 78 Gew.-% bis 90 Gew.-% und ganz besonders bevorzugt 80 Gew.% bis 85 Gew.-%.

Der Anteil der Monomere (a), die Hydroxylgruppen tragen bezogen auf das Gesamtgewicht der Monomere (a) beträgt vorzugsweise 5 Gew.-% bis 25 Gew.-%, besonders bevorzugt 10 Gew.-% bis 22 Gew.-% und ganz besonders bevorzugt 15 Gew.% bis 20 Gew.-%.

Typische und bevorzugte Monomere (a), die weder Hydroxylgruppen noch Glycidyl-Gruppen tragen sind beispielsweise (C₁₋₈-Alkyl)acrylate und (C₁₋₈-Alkyl)methacrylate, insbesondere (C₁₋₄-Alkyl)acrylate und (C₁₋₄-Alkyl)methacrylate wie Methyl-, Ethyl-, Propyl- und Butyl-(Meth)acrylate. Besonders bevorzugt werden als derartige Monomere die Methacrylate eingesetzt, wobei der Einsatz von Methylmethacrylat und Butylmethacrylat ganz besonders bevorzugt ist.

Die Monomere (a), die Hydroxylgruppen tragen enthalten vorzugsweise genau eine Hydroxylgruppe pro Monomer. Die Hydroxylgruppen können als primäre oder sekundäre Hydroxylgruppen vorliegen. Vorzugsweise handelt es sich bei den Hydroxylgruppen tragenden Monomeren (a) um Hydroxyalkyl(meth)acrylate, wie beispielsweise Hydroxy(C₁₋₄-alkyl)acrylate und/oder Hydroxy(C₁₋₄-alkyl)methacrylate. Ganz besonders bevorzugt werden als Hydroxylgruppen tragende Monomere (a) Acrylate eingesetzt. Unter den letztgenannten sind besonders bevorzugt Hydroxy(C₁₋₄-alkyl)acrylate wie beispielsweise Hydroxyethylacrylat (HEA) oder Hydroxybutylacrylat (HBA).

Der Anteil der Monomere (a), die eine Glycidyl-Gruppe tragen bezogen auf das Gesamtgewicht der Monomere (a) beträgt vorzugsweise 15 Gew.-% bis 35 Gew.-%, besonders bevorzugt 20 Gew.-% bis 30 Gew.-% und ganz besonders bevorzugt 22 Gew.% bis 28 Gew.-%.

Die Monomere (a), die eine Glycidyl-Gruppe tragen enthalten vorzugsweise genau eine Glycidyl-Gruppe pro Monomer. Vorzugsweise handelt es sich bei den Glycidyl-Gruppen tragenden Monomeren (a) um Glycidylacrylat oder Glycidylmethacrylat, wobei letzteres besonders bevorzugt verwendet wird.

Als Monomere (b) werden einfach ethylenisch ungesättigte aromatische Monomere eingesetzt. Hierbei ist die ethylenisch ungesättigte Gruppe vorzugsweise direkt an den aromatischen Rest gebunden. Als Monomere (b) werden vorzugsweise solche der allgemeinen Formel Ar-CR¹=CR²R³ eingesetzt, wobei Ar für einen Aryl-Rest oder Heteroaryl-Rest mit vorzugsweise 5 bis 10 Kohlenstoffatomen steht, der substituiert oder unsubstituiert sein kann, d.h. ein Teil der Wasserstoffatome kann durch AlkylGruppen oder andere Gruppen ersetzt sein wie beispielsweise Sulfonsäuregruppen, und deren Ester, Phosphorsäure und deren Ester, und Carboxylgruppen und deren Ester oder Amide. Als Heteroatome kommen im Heteroaryl-Rest insbesondere N, O und S in Frage. Die Reste R¹, R² und R³ können gleich oder verschieden voneinander sein und stehen unabhängig voneinander für Wasserstoff oder lineare oder verzweigte Alkylgruppen mit vorzugsweise 1 bis 6, besonders bevorzugt 1 bis 4 Kohlenstoffatomen. Ganz besonders bevorzugt stehen die Reste R¹, R² und R³ für Wasserstoff und Ar für einen substituierten oder unsubstituierten Phenyl-Rest. Als Monomer (b) besonders bevorzugt ist Styren.

Der Aufbau der Hauptkette des polyhydroxyfunktionellen (meth)acrylierten Poly(meth)acrylats (A) aus den Monomeren (a), (b) und gegebenenfalls (c) erfolgt in dem Durchschnittsfachmann bekannter Art und Weise. Die Polymerisation der Monomeren (a), (b) und gegebenenfalls (c) erfolgt, vorzugsweise in einem organischen Lösungsmittel wie beispielsweise Butylacetat, bei erhöhter Temperatur wie beispielsweise 140 bis 180 °C, vorzugsweise 150 bis 165 °C und erhöhtem Druck von beispielsweise 2 bis 5 bar, vorzugsweise 3 bis 4 bar in Gegenwart eines Initiators, beispielsweise auf Peroxid-Basis wie Di-tert.-butylperoxid oder Di-tert.-amylperoxid (DTAP).

Nach erfolgter Herstellung der Hauptkette des polyhydroxyfunktionellen Poly(meth)acrylats mit angepfropften ungesättigten (Meth)acrylat-Seitengruppen (A) werden die Glycidyl-Gruppen der Glycidyl-Gruppen tragenden einpolymerisierten Monomere (a) mit Acrylsäure und/oder Methacrylsäure, vorzugsweise Acrylsäure unter Umsetzung der COOH-Gruppen zur Reaktion gebracht. Vorzugsweise werden sämtliche Glycidyl-Gruppen mit Acrylsäure und/oder Methacrylsäure zur Reaktion gebracht, wobei die polyhydroxyfunktionellen Poly(meth)acrylate mit angepfropften ungesättigten (Meth)acrylat-Seitengruppen (A) gebildet werden. Zu diesem Zweck ist es empfehlenswert (Meth)acrylsäure in einer etwa identischen stöchiometrischen Menge zu den Glycidyl-Gruppen der Hauptkette des Polymers einzusetzen. Auch für diese Reaktion sind dem Durchschnittsfachmann die üblichen Bedingungen bekannt. Vorzugsweise erfolgt die Reaktion in Lösung, wobei beispielsweise das gleiche Lösungsmittel wie zur Herstellung der Hauptkette des Polymers verwendet werden kann. Die Reaktion findet ebenfalls vorzugsweise bei erhöhter Temperatur wie beispielsweise 100 bis 140 °C statt und wird vorzugsweise in sauerstoffabgereicherter Luft unter Verwendung von Katalysatoren wie beispielsweise Zinkacetylacetonat, Zinnoctanoat, Dibutylzinnoxid und gegebenenfalls Antioxidantien und Inhibitoren wie beispielsweise Methylhydrochinon und solchen auf Phosphit-Basis durchgeführt.

Die polyhydroxyfunktionellen Poly(meth)acrylate mit angepfropften ungesättigten (Meth)acrylat-Seitengruppen (A) besitzen vorzugsweise eine Hydroxylzahl nach DIN EN ISO 4629 von 80 bis 200 mg KOH/g, besonders bevorzugt 80 bis 150 mg KOH/g und ganz besonders bevorzugt 90 bis 120 g KOH/g. Bei Hydroxylzahlen unter 80 mg KOH/g verschlechtern sich die mechanischen Eigenschaften. Bei zu hohen Hydroxylzahlen müssten sehr hohe Anteile an Hydroxylgruppen tragenden Monomeren eingesetzt werden, was zu Einschränkungen hinsichtlich der Glasübergangstemperatur führt.

Die Säurezahl der polyhydroxyfunktionellen Poly(meth)acrylate mit angepfropften ungesättigten (Meth)acrylat-Seitengruppen (A) beträgt vorzugsweise 0 bis 5 mg KOH/g. Sie kann nach DIN EN ISO 2114 bestimmt werden. Besonders bevorzugt tragen die polyhydroxyfunktionellen Poly(meth)acrylate mit angepfropften ungesättigten (Meth)acrylat-Seitengruppen (A) keine Säuregruppen.

Das zahlenmittlere Molekulargewicht der polyhydroxyfunktionellen Poly(meth)acrylate mit angepfropften ungesättigten (Meth)acrylat-Seitengruppen (A) beträgt vorzugsweise 800 bis 4000 g/mol, besonders bevorzugt 1000 bis 3000 g/mol und ganz besonders bevorzugt 1000 bis 2000 g/mol bestimmt mittels Gelpermeationschromatographie (Polystyrol-Standard). Das gewichtsmittlere Molekulargewicht der polyhydroxyfunktionellen Poly(meth)acrylate mit angepfropften ungesättigten (Meth)acrylat-Seitengruppen (A) beträgt vorzugsweise 2000 bis 8000 g/mol, besonders bevorzugt 3000 bis 6000 g/mol und ganz besonders bevorzugt 3500 bis 5500 g/mol bestimmt mittels Gelpermeationschromatographie (Polystyrol-Standard). Bei zu hohem Molekulargewicht steigt die Viskosität der Polymerlösung bzw. der fertigen Lacklösung an, worunter die Verarbeitbarkeit leidet. Ist das Molekulargewicht zu niedrig, werden Trocknung und Netzwerkbildung negativ beeinflusst.

Der Doppelbindungsgehalt hängt üblicherweise vom Anteil des Epoxygruppen tragenden Monomeren (a) in der Hauptkette des Polymers ab, da über dieses die (Meth)acrylsäure in das Polymer eingeführt wird. Vorzugsweise beträgt der gewichtsprozentuale Anteil der CH₂=CH-Gruppen und CH(CH₃)=CH-Gruppen im polyhydroxyfunktionellen Poly(meth)acrylat mit angepfropften ungesättigten (Meth)acrylat-Seitengruppen (A) (im folgenden auch als Doppelbindungsgehalt bezeichnet) 1,5 bis 8 Gew.-%, besonders bevorzugt 2 bis 6 Gew.-% und ganz besonders bevorzugt 2 bis 4 Gew.-% bezogen auf das additive Gesamtgewicht der eingesetzten Monomere (a), (b), ggf. (c) einschließlich der für die Pfropfung eingesetzten (Meth)acrylsäure.

Die Glasübergangstemperatur des polyhydroxyfunktionellen Poly(meth)acrylats mit angepfropften ungesättigten (Meth)acrylat-Seitengruppen (A) beträgt vorzugsweise mindestens -10 °C, besonders bevorzugt von 20°C bis 60°C und ganz besonders bevorzugt von 30°C bis 40°C. Die Glasübergangstemperatur lässt sich an einer Probe messen, die gemäß DIN EN ISO 16805 vorbereitet wurde. Einziger Unterschied zur vorgenannten DIN ist, dass als Substrat Glas verwendet wurde, das Bindemittel mit einer Nass-Schichtdicke von 100 µm aufgerakelt und 60 min bei 130 °C getrocknet wurde. Die eigentliche Messung der Glasübergangstemperatur erfolgt mittels Differentialscanningkalorimetrie (DSC) nach ISO 11357-2, jedoch abweichend bei einer Aufheizrate von 10 °C/min. Dabei wird die Probe zunächst von -80 °C auf +100 °C aufgeheizt. Anschließend wird von +100 °C wieder auf -80 °C abgekühlt. Die Messung erfolgt, indem die Probe erneut von -80 °C auf +120 °C aufgeheizt wird. Durch das einmalige Aufheizen und erneute Abkühlen vor dem eigentlichen Messlauf werden die Proben thermisch so vorbehandelt, dass ihre thermische "Vorgeschichte" gelöscht wurde. Zur Auswertung der Glasübergangstemperatur wird der Wendepunkt der 3. Wärmestromverlaufskurve verwendet, wie in der ISO 11357-2 beschrieben.

Als Komponente (A) besonders bevorzugt ist ein polyhydroxyfunktionelles Poly(meth)acrylat mit angepfropften ungesättigten (Meth)acrylat-Seitengruppen, wobei dieses ein (Meth)acrylatcopolymerisat aus (a) einem oder mehreren einfach ungesättigten Acrylat- und/oder Methacrylat-Monomeren und (b) einem oder mehreren einfach ethylenisch ungesättigten aromatischen Monomeren ist, wobei ein Teil der Monomere (a) Hydroxylgruppen trägt und ein weiterer Teil der Monomere (a) Epoxy-Gruppen trägt, und wobei nach erfolgter Polymerisationsreaktion die Epoxy-Gruppen vollständig oder teilweise, vorzugsweise vollständig mit Acrylsäure und/oder Methacrylsäure unter Erhalt der Kohlenstoff-Kohlenstoff-Doppelbindungen in der Acrylsäure und/oder Methacrylsäure umgesetzt sind und wobei dieses
a. eine Hydroxylzahl von 80 bis 200 mg KOH/g
b. einen Doppelbindungsgehalt 1,5-8 Gew.%, und
c. ein gewichtsmittleres Molekulargewicht M_{w} von 2000-8000 g/mol besitzt.

### Komponente (B)

Bei Komponente (B) handelt es sich um ein polyisocyanatfunktionelles, mindestens zwei (Meth)acrylat-Gruppen enhaltendes aliphatisches Urethan. Die Grundstruktur wird somit durch ein aliphatisches organisches Monomer, Oligomer oder Polymer enthaltend Urethanstrukturen gebildet. Komponente (B) enthält dabei mindestens zwei Isocyanatgruppen und mindestens zwei ungesättigte (Meth)acrylatgruppen. Vorzugsweise enthält Komponente (B) 2 bis 6, besonders bevorzugt 2 bis 4 und ganz besonders bevorzugt genau 2 Isocyanatgruppen und unabhängig davon 2 bis 6, besonders bevorzugt 2 bis 4 und ganz besonders bevorzugt genau 2 ungesättigte (Meth)acrylatgruppen.

Komponente (B) lässt sich im Sprachgebrauch des Durchschnittsfachmanns auf dem vorliegenden Gebiet auch als isocyanatfunktionelles Urethan(meth)acrylat mit mindestens zwei Isocyanatgruppen und mindestens zwei (Meth)acrylatgruppen charakterisieren. Komponente (B) ist vorzugsweise ein Oligomer oder Polymer.

Ein Beispiel für eine derartige Verbindung ist das unter der Handelsbezeichnung Laromer LR 9000 erhältliche Produkt der BASF SE oder Desmolux D100 der Firma Bayer MaterialScience.

### Komponente (C)

Bei Komponente (C) handelt es sich um ein (meth)acrylatfunktionelles, von Isocyanatgruppen freies aliphatisches Urethan. Komponente (C) unterscheidet sich von Komponente (B) im Wesentlichen dadurch, dass Komponente (C) keine Isocyanatgruppen enthält, sondern lediglich mindestens zwei (Meth)acrylatgruppen, vorzugsweise 2 bis 6 (Meth)acrylatgruppen, besonders bevorzugt 2 bis 4 (Meth)acrylatgruppen.

Ein Beispiel für eine derartige Verbindung ist das unter der Handelsbezeichnung Desmolux LP WDJ 3413 erhältliche Produkt der Firma Bayer MaterialScience.

### Komponente (D)

Bei Komponente (D) handelt es sich um eine hydroxyfunktionelle, (meth)acrylatfunktionelle, von Isocyanatgruppen und Urethangruppen freie aliphatische Komponente mit einem Molekulargewicht von maximal 1000 g/mol, vorzugsweise 400 bis 600 g/mol, besonders bevorzugt 500 bis 530 g/mol. Da es sich bei den Verbindungen der Komponente (D) im Allgemeinen um molekular einheitliche Verbindungen handelt, stellen die Molekulargewichte keine mittleren Molekulargewichte sondern tatsächliche Molekulargewichte der Verbindungen dar. Durch das Fehlen von Urethangruppen unterscheidet sich diese Komponente bereits von den Komponenten (B) und (C). Sie unterscheidet sich von Komponente (A) dadurch, dass sie rein aliphatisch ist und keine aromatischen Struktureinheiten enthält. Im Übrigen unterscheidet sich die Komponente (D) von Komponente (A) auch durch ihr geringes Molekulargewicht. Auch die Grundstruktur der Komponente (D) leitet sich nicht von einem Poly(meth)acrylat ab, sondern kann als Monomer oder Dimer aufgefasst werden.

Derartige als Komponente (D) verwendete Verbindungen werden im Allgemeinen im Bereich der strahlenhärtenden Systeme als Reaktivverdünner bezeichnet. Eine Besonderheit der Komponente (D) ist, dass diese neben 4, besonders bevorzugt 4 bis 6 (Meth)acrylat-Gruppen auch mindestens eine, vorzugsweise eine oder maximal zwei Hydroxylgruppen enthält.

Beispiele für derartige Verbindungen der Komponente (D) sind Dipentaerythritoltetraacrylat und Dipentaerythritolpentaacrylat, wie beispielsweise die Handelsprodukte Sartomer 399, Sartomer 399 LV, Sartomer 444 D.

### Komponente (E)

Als Komponente (E) wird ein aliphatisches Polymercaptan eingesetzt. Es handelt sich hierbei vorzugsweise um eine aliphatische verzweigte Verbindung, die endständig mindestens zwei, beispielsweise 2 bis 6, vorzugsweise mindestens drei und besonders bevorzugt genau drei Thiol-Gruppen aufweist. Zum Aufbau des Grundgerüsts des aliphatischen Polymercaptans eignen sich beispielsweise monomere Polyole, wie beispielsweise Glycerol, Trimethylolpropan, Pentaerythritol, Dipentaerythritol, Neopentylglykol, wobei die Polyole auch mono- oder polyalkoxyliert vorliegen können. Als Alkoxylierungsagentien eignen sich die bekannten Alkoxylierungsagentien wie beispielsweise Ethylenoxid, Propylenoxid oder Butylenoxid, insbesondere jedoch Ethylenoxid. Die Thiolgruppen können an die endständigen Hydroxylgruppen des gegebenenfalls alkoxylierten Polyols beispielsweise durch Veresterung mittels Mercaptopropionsäure eingeführt werden.

Besonders bevorzugt sind aliphatische Polymercaptane (E), die Polyethylenoxideinheiten enthalten. Vorzugsweise besitzen derartige Polymercaptane (E) ein zahlenmittleres Molekulargewicht von 200 bis 2500 g/mol, besonders bevorzugt 400 bis 1400 und ganz besonders bevorzugt 500 bis 900 g/mol, wie beispielsweise 650 bis 750 g/mol.

Besonders geeignet erweist sich beispielsweise die Verwendung von ethoxyliertem Trimethylolpropan, das mit drei Mol Mercaptopropionsäure verestert ist und eine zahlenmittlere Molmasse von 650 bis 750 g/mol besitzt. Derartige Verbindungen sind beispielsweise von der Firma BRUNO BOCK Chemische Fabrik GmbH & Co. KG unter der Handelsbezeichnung Thiocure ® erhältlich, wie beispielsweise Thiocure ® ETTMP 700 THIOCURE, ® ETTMP 1300,oder THIOCURE® PETMP.

### Komponente (F)

Als Komponente (F) zwingend enthalten ist eine mit einem Amin blockierte Phosphorsäure oder Phosphonsäure, wobei das Amin einen pK_{b}-Wert von ≥ 3 und einen Siedepunkt bei Normaldruck von > 100 °C besitzt. Derartige Verbindungen sind beispielsweise in der WO-A- 2009/077180 beschrieben.

Besonders bevorzugt werden als Amine bicyclische Amine eingesetzt wie beispielsweise Triethylendiamin und als Phosphorsäureester Dialkylphosphorsäureester wie beispielsweise Di(2-ethylhexyl)phosphorsäure.

### Komponente (G)

Als Komponente (G) wird mindestens ein Photoinitiator gewählt aus der Gruppe bestehend aus α-Hydroxyalkylphenylketonen und Monoacylphosphinoxiden eingesetzt. Vorzugsweise wird mindestens je ein Photoinitiator der vorgenannten Verbindungsklassen eingesetzt.

Ein geeignetes Handelsprodukt, in welchem bereits eine Mischung aus Photoinitiatoren der beiden Verbindungsklassen vorliegt, ist beispielsweise das von der Firma BASF SE erhältliche Darocur 4265. Auch eine Mischung aus Darocur TPO und Darocur 1173 in einem anderen Mischungsverhältnis als 50:50 Gew. % wie in Darocur 4265 ist aktiv. Darüber hinaus können auch beispielsweise Irgacure 819 oder Irgacure 184 oder Mischungen der enthaltenen aktiven Spezies verwendet werden.

Eine weitere geeignete Photoinitiatorverbindungsklasse ist die der α-Alkoxyarylphenylketone. Ein typischer Vertreter dieser Klasse ist beispielsweise Irgacure 651 der Firma BASF SE.

Neben den Komponenten (A), (B), (C), (D), (E), (F) und (G) kann die erfindungsgemäße Klarlackzusammensetzung auch weitere Komponenten enthalten.

Da es sich um einen lösemittelbasierten Klarlack handelt, enthält dieser einen Anteil an Lösemittel von vorzugsweise etwa 30 bis 50 Gew.-%, besonders bevorzugt 30 bis 45 Gew.-% und ganz besonders bevorzugt 35 bis 45 Gew.-% bezogen auf das Gesamtgewicht der Beschichtungsmittelzusammensetzung. Die einsetzbaren Lösungsmittel sind von den zwingend enthaltenen Komponenten (A) bis (G) verschieden. Die Komponenten (A) bis (G) können jedoch in Lösemitteln vorgelöst vorliegen. Geeignete Lösemittel sind beispielsweise Ester, wie Butylacetat oder 1-Methoxy-2-propylacetat, Ketone, wie Methylisobutylketon oder Methylethylketon, Alkohole, wie Isopropanol, Ether, wie Butylglykol, Methoxypropanol, (Alkyl)aromaten, wie beispielsweise Xylol, Mono-, Di- oder Triethylbenzol, Propyl- oder Isopropylbenzol, Ethylmethylbenzol, aliphatische Kohlenwasserstoffe, wie beispielsweise Testbenzin, Terpenkohlenwasserstoffe, wie beispielsweise Dipentene.

Weitere Zusatzstoffe, die weder zu den Komponenten (A) bis (G) noch zu den Lösemitteln zu rechnen sind, sind beispielsweise Katalysatoren die eine Hydroxy-Isocyanat-Reaktion katalysieren, wie beispielsweise zinn- oder bismuthaltige Katalysatoren. Hierzu gehört insbesondere Dibutylzinndilaurat oder Bismut(3+) neodecanoat (zum Beispiel in Coscat® 83 der Firma C. H. Erbslöh KG). Der zusätzliche Einsatz derartiger Katalysatoren äußert sich vorteilhaft in Bezug auf die Durchtrocknung bei Raumtemperatur gegen Ende der Aushärtezeit. Ferner beschleunigt es die Nach- bzw. Abreaktion des Isocyanates auch mit Luftfeuchtigkeit. Zu den weiteren Zusatzstoffen sind beispielsweise auch oberflächenaktive Mittel zu rechnen, die beispielsweise für eine Entschäumung und/oder einen guten Verlauf sorgen. Hierzu gehören beispielsweise sowohl hochmolekulare, nichtionische, silikonfreie oberflächenaktive Mittel als auch polyethermodifizierte Polydimethylsiloxane.

Der erfindungsgemäße UV- und thermisch härtende lösemittelbasierte Klarlack enthält folgende Anteile der erfindungswesentlichen Komponenten bezogen auf das Gesamtgewicht des Klarlacks:
15 bis 33, besonders bevorzugt 20 bis 30 Gew.-% an Komponente (A),
5 bis 30, besonders bevorzugt 10 bis 20 Gew.-% an Komponente (B),
1 bis 9, besonders bevorzugt 2 bis 8 Gew.-% an Komponente (C),
3 bis 16, besonders bevorzugt 3 bis 10 Gew.-% an Komponente (D),
0,5 bis 25, besonders bevorzugt 1 bis 15 Gew.-% an Komponente (E),
0,009 bis 0,1, besonders bevorzugt 0,02 bis 0,09 Gew.-% an Komponente (F) und
0,03 bis 3,1, besonders bevorzugt 0,2 bis 2 Gew.-% an Komponente (G).

Die prozentualen Angaben beziehen sich hierbei immer auf den Wirkstoff. Sollte daher eine oder mehrere der Komponente (A) bis (G) - wie oben beschrieben - in vorgelöster Form eingesetzt werden, so zählen die nicht unter die Definitionen von (A) bis (G) fallenden Lösemittel nicht zum prozentualen Anteil, der entsprechenden Komponente.

In einer ganz besonders bevorzugten Ausführungsform des erfindungsgemäßen Klarlacks enthält dieser:
23 bis 28 Gew.-% an Komponente (A),
13 bis 18 Gew.-% an Komponente (B),
3 bis 8 Gew.-% an Komponente (C),
4 bis 9 Gew.-% an Komponente (D),
3 bis 7 Gew.-% an Komponente (E),
0,02 bis 0,08 Gew.-% an Komponente (F) und
0,5 bis 1,2 Gew.-% an Komponente (G).

Vorteilhaft ist die getrennte Lagerung der Komponenten (A) bis (G), um diese erst unmittelbar vor der Applikation zu mischen. Daher ist weiterer Gegenstand der vorliegenden Erfindung ein Modulsystem zur Herstellung des erfindungsgemäßen Klarlacks, umfassend ein Modul (I) enthaltend Komponenten (A), (C), (D), (F) und (G), ein Modul (II) enthaltend Komponenten (E) und ein Modul (III) enthaltend Komponenten (B).

Gegenstand der vorliegenden Erfindung ist auch ein Verfahren zur Herstellung einer Lackierung unter Verwendung des erfindungsgemäßen Klarlacks, umfassend die Schritte
(i) ein oder mehrmaliges Aufbringen des erfindungsgemäßen Klarlacks auf ein vorbeschichtetes oder unbeschichtetes Substrat
(ii) Bestrahlung des aufgebrachten Klarlackfilms oder der aufgebrachten Klarlackfilme mittels UV-Strahlung für eine Dauer von 3 bis 10 min bei einer Temperatur zwischen 10 und 120 °C, vorzugsweise 10 und 80 °C, besonders bevorzugt zwischen 15 und 35 °C, und ganz besonders bevorzugt bei Raumtemperatur (25 °C)
(iii) gegebenenfalls anschließendes Nachpolieren des bestrahlten und wärmebehandelten und dadurch gehärteten Klarlackfilms.

Der Abstand des Strahlers zum Substrat sollte vorzugsweise zwischen 0,5 und 3,5 m betragen.

Als Strahler sind beispielsweise solche geeignet, wie sie in der SE-QuickCure Handlampe der Firma Sehon Innovative Lackieranlagen GmbH (Gechingen, Deutschland) eingebaut sind. Besonders bevorzugt werden in Bestrahlungsanlagen UV-A-Lampen eingesetzt, die auch einen geringeren Anteil an UV-B-Strahlung in Bezug auf UV-A-Strahlung abstrahlen. Vergleichsversuche mit reinen UV-A-Lampen haben gezeigt, dass ein kleiner Anteil an UV-B-Strahlung die rasche Aushärtung der erfindungsgemäßen Klarlacke stark begünstigt.

Besonders geeignete Strahler weisen folgende Energiestromdichten in einem Messabstand von 200 cm auf:
Energiestromdichte der UV-A-Strahlung (>315-380 nm): 500 bis 1000 Mikrowatt/cm²
Energiestromdichte der UV-B-Strahlung (>280-315 nm): 100 bis 300 Mikrowatt/cm²
Energiestromdichte der UV-C-Strahlung (200-280 nm): 0 bis 100 Mikrowatt/cm²
Energiestromdichte der UV/Vis-Strahlung (380-400 nm): 200 bis 400 Mikrowatt/cm².

Ganz besonders bevorzugte Strahler weisen folgende Energiestromdichten in einem Messabstand von 200 cm auf:
Energiestromdichte der UV-A-Strahlung (>315-380 nm): 730 Mikrowatt/cm²
Energiestromdichte der UV-B-Strahlung (>280-315 nm): 210 Mikrowatt/cm²
Energiestromdichte der UV-C-Strahlung (200-280 nm): 60 Mikrowatt/cm²
Energiestromdichte der UV/Vis-Strahlung (380-400 nm): 310 Mikrowatt/cm².

Die Energiestromdichten von Strahlern können mittels eines Photodiodenarray-Spektrometers MS126 L.O.T (Messtemperatur: kompensiert auf 0 °C; Messgitter: Modell 77413 (Line Density 600 L/mm); Messbereich 200-400 nm (Belichtung 0,1 s); Festspalt: 25 Mikrometer + 3 mm (über 1 m Lichtleiter); Messabstand 200 cm) bestimmt werden. Hierdurch lassen sich besonders geeignete Strahler auf einfache Art und Weise auswählen.

Die erfindungsgemäßen Klarlacke lassen sich überall dort einsetzen, wo Klarlackierungen gefordert werden, die schnell und vorzugsweise bei Raumtemperatur härten sollen. Vorzugsweise dort, wo eine rasche Polierfähigkeit erreicht werden soll. Der Einsatz ist insbesondere bei gekrümmten Substraten von Vorteil, wie sie beispielsweise zumeist bei der KFZ-Reparaturlackierung vorliegen.

Im Folgenden soll die Erfindung anhand von Beispielen näher erläutert werden.

### BEISPIELE

### Beispiel A

### Herstellung der Komponente (A)

In einem ersten Schritt wurde ein glycidylfunktionalisiertes Copolymer hergestellt. Hierzu wurde in einem Standardrührkessel 1165,6 g Butylacetat vorgelegt und unter Stickstoffatmosphäre bei 3,5 bar auf 164 °C erhitzt. Eine Mischung von 14 g Butylacetat und 81,8 g DTAP-Peroxid wurde innerhalb von 15 min zugetropft. 15 min später wurde mit dem Zutropfen einer Mischung von 720,6 g Styren, 394,7 g Methylmethacrylat, 171,6 g Butylmethacrylat, 103 g Hydroxyethylacrylat, 68,6 g Hydroxybutylacrylat und 257,4 g Glycidylmethacrylat begonnen und diese wurde über 4 x 60 min gleichmäßig zudosiert. Es wurden noch 30 min Initiator nachdosiert, so dass sich eine Gesamtinitiatorzulaufzeit von 285 min ergeben. Nach Beendigung der Dosierung wurde weitere 1 h bei 150 °C und 3,5 bar gerührt. Es resultierte eine Polymerlösung mit einem Festkörper von 57,9 Gew.-% (1 Stunde Trocknen bei 130 °C) und einer Viskosität bei 23 °C von 253 mPas bei 750 Umdrehungen pro Minute mit Spindel 3 (Kegel-Platte-Viskosimeter CAP der Firma Brookfield; die Proben wurden 10 s vortemperiert und die Messung wurde über einen Zeitraum von 30 s durchgeführt, der Wert nach 30 s ist der angegebene Messwert).

In einem zweiten Schritt wurde zu einer Mischung aus 1478,1 g der im ersten Schritt erhaltenen Polymerlösung, 0,92 g Zinkacetylacetonat (0,1 Gew.% auf fest), 0,6 g Doverphos S 9228 (0,065 Gew.% auf fest) und 0,3 g Methylhydrochinon (0,04 Gew. % auf fest) unter Magerluft bei 120 °C 62,2g Acrylsäure innerhalb 1 h zudosiert. Die Mischung wurde so lange bei 120 °C gehalten, bis die Säurezahl einen Wert von 2 mg KOH/g unterschritt. Es resultierte eine klare 61,8 gew.-%ige Polymerlösung der Komponente (A), wobei das Polymer eine OH-Zahl von 97 mg KOH/g, ein gewichtsmittleres Molekulargewicht von 4485 g/mol, ein zahlenmittleres Molekulargewicht von 1618 g/mol und einen Doppelbindungsgehalt von 2,65 Gew.-% bezogen auf das Gesamtgewicht der im Polymer eingebauten Monomere inklusive der angepfropften Acrylsäure besaß. Das Polymer besitzt eine Glasübergangstemperatur von 35 °C gemessen mittels Differential Scanning Calorimetry (DSC) bei einer Aufheizrate von 10 °C/min (Probenvorbereitung nach DIN EN ISO 16805 mit einer Glastafel als Substrat und aufgerakelter Probe: 100 Mikrometer, 60 min bei 130 °C getrocknet) und eine Farbzahl nach Gardner von 0,5 (nach DIN EN ISO 4630-2).

### Beispiel B

### Herstellung eines erfindungsgemäßen Klarlacks unter Verwendung der Komponente (A) aus Beispiel A

Es wurde ein Stammlack-Modul (I) enthaltend Komponenten (A), (C), (D), (F) und (G), ein Einstellzusatz-Modul (II) enthaltend Komponente (E) und ein Härter-Modul (III) enthaltend Komponente (B) hergestellt. Die Zusammensetzungen der einzelnen Module können Tabelle 1 entnommen werden. Kurz vor der Applikation wurden die Module (I), (II) und (III) unter Bildung des erfindungsgemäßen Klarlacks miteinander vermischt.

**Tabelle 1**

| **Module** | eingesetzte Menge in Gew.-Teilen bezogen auf 100 Gew.-Teile des Klarlacks |
|---|---|
| **Stammlackmodul (I)** | |
| Komponente (A) aus **Beispiel A** (61,8 gew.-%ig) | 41,74 |
| Komponente (C)¹ | 9,21 |
| Komponente (D)² | 6,14 |
| Komponente (F)³ | 0,09 |
| Komponente (G)⁴ | 0,77 |
| Verlaufmittel⁵ | 0,24 |
| Lichtstabil isatoren⁶ | 1,1 |
| Dibutylzinndilaurat | 0,09 |
| zusätzliche Lösemittel⁷ | 2,0 |

| **Einstellmodul (II)** | |
|---|---|
| Komponente (E)⁸ | 4,51 |
| Entschäumer/Verlaufmittel⁹ | 0,27 |
| Einstellzusatz¹⁰ | 13,24 |

| **Härtermodul (III)** | |
|---|---|
| Komponente (B)¹¹ | 15,45 |
| Butylacetat | 5,15 |
| (I)+(II)+(III) | 100,00 |

| | |
|---|---|
| ¹ ungesättigtes aliphatisches Urethanacrylat (58 %ig in Butylacetat) ² Dipentaerythritolpentaacrylat (100 %ig) ³ Phosphorsäure-di-(C₈-alkylester) blockiert mit Triethylendiamin (50 %ig in Isopropanol) ⁴ Photoinitiatormischung aus einem α-Hydroxyalkylphenylketon und einem Monoacylphosphinoxid ⁵ Mischung zweier polyethermodifizierter Polydimethylsiloxane (56 %ig) ⁶ Mischung zweier Lichtstabilisatoren ⁷ Mischung aus Butylacetat und Methylisobutylketon ⁸ Ethoxyliertes Trimethylpropan-tri(3-mercapto-propionat); Mₙ = 708 g/mol; Funktionalität: 3 ⁹ silikonfreier, nicht-ionischer hochmolekularer Entschäumer/Verlaufmittel (50 %ig) ¹⁰ Glassodur-Einstellzusatz, enthaltend ca. 22,5 % Alkylbenzole und ca. 77,5 % verschiedene Essigsäurester (Produkt der BASF Coatings GmbH) ¹¹ aliphatisches Urethanacrylat aus Hydroxyethylacrylat und Hexamethylendiisocyanat-Oligomeren | |

### Polierfähigkeit:

Zur Überprüfung der Polierfähigkeit des erfindungsgemäßen Klarlacks wird dieser auf ein DIN A4 Stahlblech appliziert, welches mit einem 2K-PUR-Füller und einem Wasserbasislack vorbeschichtet wurde. Die Applikation erfolgte in zwei Spritzgängen mit 1 Minute Zwischenablüftzeit und 5 Minuten abschließender Ablüftzeit in der Spritzkabine. Die Trocknung erfolgte über eine Dauer von 9 Minuten unter UV-Bestrahlung in einem Abstand von 180 cm im 90 ° Winkel zum Objekt bei einer Temperatur von 23°C und einer Luftfeuchtigkeit von 50% (+- 5%). Der UV-Strahler zeigt folgende Charakteristik (bestimmt mit: Belt Radiometer ILT 390 C):

| Abstand in cm | Dosis in mJ/cm² |
|---|---|
| 50 | 18742 |
| 100 | 5731 |
| 180 | 1662 |
| 200 | 1437 |

Der Messbereich des Gerätes liegt zwischen 225 und 425 nm.

Nach der Trocknung wurde der erfindungsgemäße UV-Klarlack mit einer Excenterschleifmaschine der Firma Festo und Schleifpapier P2000 der Firma 3M auf einer Fläche von ca. 10x10cm in der Mitte des Testblechs mattiert. Im Anschluss mit einer Poliermaschine (Firma Rupes) in den folgenden 2 Stufen aufpoliert.
In der ersten Stufe wurde mit Polierschaum (genoppt) unter Verwendung der Schleifpaste Plus der Firma 3M für 30 Sekunden poliert. Die zweite Polierstufe erfolgte mit einem Polierpad unter Verwendung einer Hochglanzmaschinenpolitur der Firma 3M für ebenfalls 30 Sekunden.

Anschließend erfolgte eine sofortige optische Beurteilung der bearbeiteten Fläche auf:
1. Schleifriefen im Tageslicht
2. Glanz (nach DIN EN ISO 2813; gemessen im Empfänger-Aperturwinkel von 20°)
3. Farbtonverschiebung (visuell im Tageslicht) und
4. Randzonen (Sichtbarkeit von Randzonen der polierten Stelle)

### Drying Recorder

### Gemäß ASTM D 5895 - 03 (Reapproved 2008)

Für die Beurteilung mittels drying recorder wurden Glasstreifen mit einer Sata RP 1,3 NR Fließbecherpistole in 2 Spritzgängen lackiert (resultierende Trockenschichtdicke 40-45 µm). Dabei wurde zwischen den Spritzgängen 1 min abgelüftet. Anschließend wurden über ein Testdauer von 12 Stunden bei 23°C und 50% relativer Luftfeuchtigkeit analog zu ASTM D 5895 - 03 die set-to-Touch time, Tack-Free Time, Dry-Hard Time und Dry-Through Time ermittelt.

| | |
|---|---|
| Typ: | The B.K. Drying Recorder |
| Firma: | The Mickle Laboratory Engineering Co. LTD GB |

### Probenpräparation:

| | |
|---|---|
| Trägermaterial: | Glasstreifen |
| Spritzpistole: | Sata RP 1,3 NR Anwendung der Pistole gemäß Technischer Information |
| Spritzgänge: | 2 |
| Zwischenablüftzeit: | 1 Minute |
| Testdauer: | 12 Stunden |
| Temperatur: | 23°C |
| Luftfeuchte: | 50% |
| Trockenschichtdicke: | 40-45µm |

Die Farbzahlen wurden mit einem Dr. Lange LICO 200 Messgerät zur Farbzahlbestimmung ermittelt nach DIN EN ISO 4630-2.

| **Stammlack-Modul** | **Stammlack 1 (Erfindung)** | **Stammlack V1 (Vergleich)** | **Stamm lack V2 (Vergleich)** | **Stamm lack V3 (Vergleich)** |
|---|---|---|---|---|
| Komponente (A)^{a} | | | 65 | 65 |
| Komponente (A) **aus Beispiel A** | 68 | | | |
| Komponente (C)^{b} | 15 | | | |
| Komponente (D)^{c} | 10 | 24 | | 24 |
| Komponente (F)^{d} | 0,15 | | | |
| Komponente (G)^{e} | 1,25 | 1,5 | 1,5 | 1,5 |
| Verlaufmittel^{f} | 0,4 | 0,4 | 0,4 | 0,4 |
| Entschäumer/ Verlaufmittel^{g} | | | 0,5 | 0,5 |
| Lichtstabil isatoren^{h} | 1,8 | 1,8 | 1,8 | 1,8 |
| Dibutylzinndilaurat | 0,15 | 0,15 | 0,15 | 0,15 |
| Butylacetat | 1,25 | 6,15 | 2,65 | 2,65 |
| Methylisobutylketon | 2 | 4 | 4 | 4 |
| Triallylisocyanurat | | 62 | 24 | |

| **Einstellzusatz-Modul** | **Einstellzusatz 1** | **Einstellzusatz 2** |
|---|---|---|
| Einstellzusatzⁱ | 73,50 | 65,000 |
| Komponente (E)^{j} | | 35,000 |
| Komponente (E)^{k} | 25,00 | |
| Entschäumer/Verlaufmittel^{g} | 1,50 | |

| **Härter-Modul** | **Härter 1** | **Härter V1** |
|---|---|---|
| Komponente (B)^{l} | 75,00 | |
| Butylacetat | 25,00 | |
| TDI-basiertes Polyisocyanat (75 %ig in Butylacetat) 13,3 % NCO-Gehalt | | 100 |

| | | |
|---|---|---|
| ^{a} Parocryl VP 56017 (ein polyhydroxyfunktionelles Poly(meth)acrylat mit angepfropften ungesättigten (Meth)acrylat-Seitengruppen) ^{b} ungesättigtes aliphatisches Urethanacrylat (58 %ig in Butylacetat) ^{c} Dipentaerythritolpentaacrylat (100 %ig) ^{d} Phosphorsäure-di-(C₈-alkylester) blockiert mit Triethylendiamin (50 %ig in Isopropanol) ^{e} Photoinitiatormischung aus einem α-Hydroxyalkylphenylketon und einem Monoacylphosphinoxid ^{f} Mischung zweier polyethermodifizierter Polydimethylsiloxane (56 %ig) ^{g} silikonfreier, nicht-ionischer hochmolekularer Entschäumer/Verlaufmittel (50 %ig) ^{h} Mischung zweier Lichtstabilisatoren ⁱ Glassodur-Einstellzusatz, enthaltend ca. 22,5 % Alkylbenzole und ca. 77,5 % verschiedene Essigsäurester (Produkt der BASF Coatings GmbH) ^{j} Pentaerythritol-tetra(3-mercapto-propionat) Funktionalität: 4 ^{k} Ethoxyliertes Trimethylpropan-tri(3-mercapto-propionat); Mₙ = 708 g/mol; Funktionalität: 3 ^{l} aliphatisches Urethanacrylat aus Hydroxyethylacrylat und Hexamethylendiisocyanat-Oligomeren | | |

### Ausführungsbeispiele

| **Module** | **Volumenteile** | **Beispiel 1** | **Beispiel V1** | **Beispiel V2** | **Beispiel V3** | **Beispiel V4** | **Beispiel V5** |
|---|---|---|---|---|---|---|---|
| Stammlack | 3 | Stammlack 1 | Stammlack V1 | Stammlack V2 | Stammlack V3 | Stammlack V1 | Stammlack V3 |
| Härter | 1 | Härter 1 | Härter 1 | Härter 1 | Härter V1 | Härter V1 | Härter **1** |
| Einstellzusatz | 1 | Einstellzusatz 1 | Einstellzusatz 2 | Einstellzusatz 2 | Einstellzusatz 2 | Einstellzusatz 2 | Einstellzusatz 2 |

| **Trocknung bei Raumtemperatur** | **Beispiel 1** | **Beispiel V1** | **Beispiel V2** | **Beispiel V3** | **Beispiel V4** | **Beispiel V5** |
|---|---|---|---|---|---|---|
| Drying Recorder 12h | | | | | | |
| set-to-touch time nach Start in h | 0,25 | 2 | 0,5 | 0,5 | 12 | 1 |
| Tack-free time nach Start in h | 0,75 | 12 | 2 | 1 | | 2 |
| Dry-hard time nach Start start in h | 1,25 | | 6,5 | 2 | | 7 |
| Dry-through time nach Start in h | 1,5 | | 11 | 7 | | 11,5 |
| Bemerkungen/Beurteilung: Trocknung bei Raumtemperatur nach 24h | trocken, grifffest, guter Decklackstand | keine Trocknung, nasser Klarlack | klebt stark, Nadelstiche | trocken grifffest, Nadelstiche, weiß angelaufen | keine Trocknung, nasser Klarlack | klebrige Oberfläche feine Nadelstiche |

| **Polierfähigkeit** | | | | | | |
|---|---|---|---|---|---|---|
| 1. Schleifriefen im Tageslicht | keine | sichtbar | sichtbar | sichtbar | sichtbar | keine |
| 2. Glanz (nach DIN EN ISO 2813; gemessen im Empfänger-Aperturwinkel von 20°) | 89 | 75 | 80 | 78 | 73 | 89 |
| 3. Farbtonverschiebung (visuell im Tageslicht) | keine | deutlich | leicht | stark | stark | keine |
| 4. Randzonen (Sichtbarkeit von Randzonen der polierten Stelle) | keine | sichtbar | sichtbar | sichtbar | sichtbar | leichte Markierung |

## Patentansprüche

1. UV- und thermisch härtbarer lösemittelbasierter Klarlack, enthaltend
(A) mindestens ein polyhydroxyfunktionelles Poly(meth)acrylat mit angepfropften ungesättigten (Meth)acrylat-Seitengruppen,
(B) mindestens ein polyisocyanatfunktionelles, mindestens zwei (Meth)acrylatgruppen enthaltendes aliphatisches Urethan,
(C) mindestens ein (meth)acrylatfunktionelles, von Isocyanatgruppen freies aliphatisches Urethan,
(D) mindestens eine hydroxyfunktionelle, (meth)acrylatfunktionelle, von Isocyanatgruppen und Urethangruppen freie aliphatische Komponente mit einem Molekulargewicht von maximal 1000 g/mol und einer (Meth)acrylatfunktionalität von mindestens 4,
(E) mindestens ein aliphatisches Polymercaptan,
(F) mindestens eine mit einem Amin blockierte Phosphorsäure oder Phosphonsäure, wobei das Amin einen pK_{b}-Wert von ≥ 3 und einen Siedepunkt bei Normaldruck von > 100 °C besitzt, und
(G) mindestens einen Photoinitiator gewählt aus der Gruppe bestehend aus α-Hydroxyalkylphenylketonen und Monoacylphosphinoxiden, wobei
15 bis 33 Gew.-% an Komponente (A),
5 bis 30 Gew.-% an Komponente (B),
1 bis 9 Gew.-% an Komponente (C),
3 bis 16 Gew.-% an Komponente (D),
0,5 bis 25 Gew.-% an Komponente (E),
0,009 bis 0,1 Gew.-% an Komponente (F) und
0,03 bis 3,1 Gew.-% an Komponente (G), jeweils bezogen auf das Gesamtgewicht des Klarlacks, enthalten sind.

2. UV- und thermisch härtbarer lösemittelbasierter Klarlack gemäß Anspruch 1, **dadurch gekennzeichnet, dass** Komponente (A) ein (Meth)acrylatcopolymerisat aus
(a) einem oder mehreren einfach ungesättigten Acrylat- und/oder Methacrylat-Monomeren,
(b) einem oder mehreren einfach ethylenisch ungesättigten aromatischen Monomeren, und gegebenenfalls
(c) einem oder mehreren von (a) und (b) verschiedenen ethylenisch ungesättigten Monomeren ist,
wobei ein Teil der Monomere (a) Hydroxylgruppen trägt und ein weiterer Teil der Monomere (a) Epoxy-Gruppen trägt, und wobei nach erfolgter Polymerisationsreaktion die Epoxy-Gruppen vollständig oder teilweise, vorzugsweise vollständig mit Acrylsäure und/oder Methacrylsäure unter Erhalt der Kohlenstoff-Kohlenstoff-Doppelbindungen in der Acrylsäure und/oder Methacrylsäure umgesetzt sind.

3. UV- und thermisch härtbarer lösemittelbasierter Klarlack gemäß Anspruch 2, **dadurch gekennzeichnet, dass** der Anteil der Monomere (a) 50 bis 70 Gew.-% und der Anteil der Monomere (b) 30 bis 50 Gew.-%, jeweils bezogen auf das Gesamtgewicht der die Hauptkette aufbauenden Monomere, beträgt.

4. UV- und thermisch härtbarer lösemittelbasierter Klarlack gemäß einem der Ansprüche 1 bis 3, **dadurch gekennzeichnet, dass** die Glasübergangstemperatur von (A) mindestens -10 °C beträgt, wobei die Glasübergangstemperatur mittels Differentialscanningkalorimetrie nach ISO 11357-2 bei einer Aufheizrate von 10°C/min bestimmt wird.

5. UV- und thermisch härtbarer lösemittelbasierter Klarlack gemäß einem der Ansprüche 1 bis 4, **dadurch gekennzeichnet, dass** (B) 2 bis 6 ungesättigte (Meth)acrylatgruppen enthält.

6. UV- und thermisch härtbarer lösemittelbasierter Klarlack gemäß einem der Ansprüche 1 bis 5, **dadurch gekennzeichnet, dass** (C) 2 bis 6 ungesättigte (Meth)acrylatgruppen enthält.

7. UV- und thermisch härtbarer lösemittelbasierter Klarlack gemäß einem der Ansprüche 1 bis 6, **dadurch gekennzeichnet, dass** (D) gewählt ist aus der Gruppe bestehend aus Dipentaerythritoltetraacrylat und Dipentaerythritolpentaacrylat.

8. UV- und thermisch härtbarer lösemittelbasierter Klarlack gemäß Anspruch 7, **dadurch gekennzeichnet, dass** (D) Dipentaerythritolpentaacrylat ist.

9. UV- und thermisch härtbarer lösemittelbasierter Klarlack gemäß einem der Ansprüche 1 bis 8, **dadurch gekennzeichnet, dass** das aliphatische Polymercaptan (E) mono- oder polyalkoxyliert ist, ein zahlenmittleres Molekulargewicht von 200 bis 2500 g/mol aufweist und 2 bis 6 Thiol-Gruppen aufweist.

10. UV- und thermisch härtbarer lösemittelbasierter Klarlack gemäß einem der Ansprüche 1 bis 9, **dadurch gekennzeichnet, dass** das Amin der Komponente (F) Triethylendiamin ist und die Phosphorsäure eine Di(2-ethylhexyl)-phosphorsäure ist.

11. UV- und thermisch härtbarer lösemittelbasierter Klarlack gemäß einem der Ansprüche 1 bis 10, **dadurch gekennzeichnet, dass** der Photoinitiator (G) sowohl ein α-Hydroxyalkylphenylketon als auch ein Monoacylphosphinoxid umfasst.

12. UV- und thermisch härtbarer lösemittelbasierter Klarlack gemäß Anspruch 1, **dadurch gekennzeichnet, dass** Komponente
(A) ein (Meth)acrylatcopolymerisat aus
(a) einem oder mehreren einfach ungesättigten Acrylat- und/oder Methacrylat-Monomeren,
(b) einem oder mehreren einfach ethylenisch ungesättigten aromatischen Monomeren, und gegebenenfalls
(c) einem oder mehreren von (a) und (b) verschiedenen ethylenisch ungesättigten Monomeren ist,
wobei ein Teil der Monomere (a) Hydroxylgruppen trägt und ein weiterer Teil der Monomere (a) Epoxy-Gruppen trägt, und wobei nach erfolgter Polymerisationsreaktion die Epoxy-Gruppen vollständig oder teilweise, vorzugsweise vollständig mit Acrylsäure und/oder Methacrylsäure unter Erhalt der Kohlenstoff-Kohlenstoff-Doppelbindungen in der Acrylsäure und/oder Methacrylsäure umgesetzt sind,
Komponenten (B) und (C) jeweils 2 bis 6 ungesättigte (Meth)acrylatgruppen enthalten,
Komponente (D) gewählt ist aus der Gruppe bestehend aus Dipentaerythritoltetraacrylat und Dipentaerythritolpentaacrylat,
Komponente (E) mono- oder polyalkoxyliert ist, ein zahlenmittleres Molekulargewicht von 200 bis 2500 g/mol aufweist und 2 bis 6 Thiol-Gruppen aufweist, und
Komponente (G) sowohl ein α-Hydroxyalkylphenylketon als auch ein Monoacylphosphinoxid umfasst.

13. Modulsystem zur Herstellung des UV- und termisch härtbarer lösemittelbasierten Klarlacks gemäß einem der Anspruch 1 bis 12, umfassend ein Modul (I) umfassend Komponenten (A), (C), (D), (F) und (G),
ein Modul (II) umfassend Komponente (E) und
ein Modul (III) umfassend Komponente (B), wobei alle Komponenten definiert sind wie in Ansprüchen 1 bis 13.

14. Verfahren zur Herstellung einer Lackierung unter Verwendung eines Klarlacks gemäß Ansprüchen 1 bis 12, umfassend die Schritte
(i) ein oder mehrmaliges Aufbringen des erfindungsgemäßen Klarlacks auf ein vorbeschichtetes oder unbeschichtetes Substrat
(ii) Bestrahlung des aufgebrachten Klarlackfilms oder der aufgebrachten Klarlackfilme mittels UV-Strahlung für eine Dauer von 3 bis 10 min bei einer Temperatur zwischen 10 und 120 °C
(iii) gegebenenfalls anschließendes Nachpolieren des bestrahlten und wärmebehandelten und dadurch gehärteten Klarlackfilms.

15. Verfahren zur Herstellung einer Lackierung nach Anspruch 14, wobei Die UV-Strahlung einen Anteil an UV-A-Strahlung und einen Anteil an UV-B-Strahlung besitzt und der Anteil der UV-B-Strahlung geringer ist als der Anteil an UV-A-Strahlung.

16. Verfahren zur Herstellung einer Lackierung nach Anspruch 14 oder 15, wobei die Energiestromdichte der UV-A-Strahlung 500 bis 1000 Mikrowatt/cm² in 200 cm Messabstand und die Energiestromdichte der UV-B-Strahlung 100 bis 300 Mikrowatt/cm² in 200 cm Messabstand beträgt.

17. Verwendung eines Klarlacks nach Ansprüchen 1 bis 12 zur Lackierung gekrümmter Substrate.

18. Verwendung eines Klarlacks nach einem der Ansprüche 1 bis 12 zur KFZ-Reparaturlackierung.

## Claims

1. UV- and thermally curable, solventborne clearcoat material, comprising
(A) at least one polyhydroxy-functional poly(meth)acrylate having grafted-on unsaturated (meth)acrylate side groups,
(B) at least one polyisocyanate-functional aliphatic urethane containing at least two (meth)acrylate groups,
(C) at least one (meth)acrylate-functional aliphatic urethane free from isocyanate groups,
(D) at least one hydroxy-functional, (meth)acrylate-functional aliphatic component free from isocyanate groups and from urethane groups and having a molecular weight of not more than 1000 g/mol and a (meth)acrylate functionality of at least 4,
(E) at least one aliphatic polymercaptan,
(F) at least one phosphoric acid or phosphonic acid blocked with an amine, the amine possessing a pK_{b} of ≥ 3 and a boiling point under atmospheric pressure of > 100°C, and
(G)at least one photoinitiator selected from the group consisting of α-hydroxyalkyl phenyl ketones and monoacylphosphine oxides, where it comprises
15% to 33% by weight of component (A),
5% to 30% by weight of component (B),
1% to 9% by weight of component (C),
3% to 16% by weight of component (D),
0.5% to 25% by weight of component (E),
0.009% to 0.1% by weight of component (F), and
0.03% to 3.1% by weight of component (G), based in each case on the total weight of the clearcoat material.

2. UV- and thermally curable, solventborne clearcoat material according to Claim 1, **characterized in that** component (A) is a (meth)acrylate copolymer of
(a) one or more monounsaturated acrylate and/or methacrylate monomers,
(b) one or more monoethylenically unsaturated aromatic monomers, and optionally
(c) one or more ethylenically unsaturated monomers different from (a) and (b), where a portion of the monomers (a) carry hydroxyl groups and a further portion of the monomers (a) carry epoxy groups, and where, after polymerization reaction has taken place, some or all, preferably all, of the epoxy groups have been reacted with acrylic acid and/or methacrylic acid, with retention of the carbon-carbon double bonds in the acrylic acid and/or methacrylic acid.

3. UV- and thermally curable, solventborne clearcoat material according to Claim 2,
**characterized in that** the fraction of the monomers (a) is 50% to 70% by weight and the fraction of the monomers (b) is 30% to 50% by weight, based in each case on the total weight of the monomers constituting the main chain.

4. UV- and thermally curable, solventborne clearcoat material according to any of Claims 1 to 3,
**characterized in that** the glass transition temperature of (A) is at least -10°C, where the glass transition temperature is determined by means of differential scanning calorimetry in accordance with ISO 11357-2 at a heating rate of 10°C/min.

5. UV- and thermally curable, solventborne clearcoat material according to any of Claims 1 to 4,
**characterized in that** (B) contains 2 to 6 unsaturated (meth)acrylate groups.

6. UV- and thermally curable, solventborne clearcoat material according to any of Claims 1 to 5,
**characterized in that** (C) contains 2 to 6 unsaturated (meth)acrylate groups.

7. UV- and thermally curable, solventborne clearcoat material according to any of Claims 1 to 6,
**characterized in that** (D) is selected from the group consisting of dipentaerythritol tetraacrylate and dipentaerythritol pentaacrylate.

8. UV- and thermally curable, solventborne clearcoat material according to Claim 7,
**characterized in that** (D) is dipentaerythritol pentaacrylate.

9. UV- and thermally curable, solventborne clearcoat material according to any of Claims 1 to 8,
**characterized in that** the aliphatic polymercaptan (E) is mono- or polyalkoxylated, has a number-average molecular weight of 200 to 2500 g/mol, and contains 2 to 6 thiol groups.

10. UV- and thermally curable, solventborne clearcoat material according to any of Claims 1 to 9,
**characterized in that** the amine of component (F) is triethylenediamine and the phosphoric acid is a di(2-ethylhexyl)phosphoric acid.

11. UV- and thermally curable, solventborne clearcoat material according to any of Claims 1 to 10,
**characterized in that** the photoinitiator (G) comprises an α-hydroxyalkyl phenyl ketone and a monoacylphosphine oxide.

12. UV- and thermally curable, solventborne clearcoat material according to Claim 1,
**characterized in that** component
(A) is a (meth)acrylate copolymer of
(a) one or more monounsaturated acrylate and/or methacrylate monomers,
(b) one or more monoethylenically unsaturated aromatic monomers, and optionally
(c) one or more ethylenically unsaturated monomers different from (a) and (b), where a portion of the monomers (a) carry hydroxyl groups and a further portion of the monomers (a) carry epoxy groups, and where, after the polymerization reaction has taken place, some or all, preferably all, of the epoxy groups have been reacted with acrylic acid and/or methacrylic acid, with retention of the carbon-carbon double bonds in the acrylic acid and/or methacrylic acid,
components (B) and (C) each contain 2 to 6 unsaturated (meth)acrylate groups,
component (D) is selected from the group consisting of dipentaerythritol tetraacrylate and dipentaerythritol pentaacrylate,
component (E) is mono- or polyalkoxylated, has a number-average molecular weight of 200 to 2500 g/mol, and contains 2 to 6 thiol groups, and component (G) comprises an α-hydroxyalkyl phenyl ketone and a monoacylphosphine oxide.

13. Modular system for producing the UV- and thermally curable,
solvent-based clearcoat material according to any of Claims 1 to 12, comprising
a module (I) comprising components (A), (C), (D), (F), and (G),
a module (II) comprising component (E), and
a module (III) comprising component (B), with all of the components defined
as in Claims 1 to 13.

14. Method for producing a coating system using a clearcoat material according to Claims 1 to 12, comprising the steps of
(i) singly or repeatedly applying the clearcoat material of the invention to a precoated or uncoated substrate
(ii) irradiating the applied clearcoat film or films with UV radiation for a time of 3 to 10 minutes at a temperature between 10 and 120°C
(iii)optionally subsequently polishing the irradiated and heat-treated and thus cured clearcoat film.

15. Method for producing a coating system according to Claim 14, where the UV radiation possesses a fraction of UV-A radiation and a fraction of UV-B radiation, and the fraction of UV-B radiation is smaller than the fraction of UV-A radiation.

16. Method for producing a coating system according to Claim 14 or 15, where the energy flux density of the UV-A radiation is 500 to 1000 microwatts/cm² as measured from a distance of 200 cm, and the energy flux density of the UV-B radiation is 100 to 300 microwatts/cm² as measured from a distance of 200 cm.

17. Use of a clearcoat material according to Claims 1 to 12 for painting curved substrates.

18. Use of a clearcoat material according to any of Claims 1 to 12 for automotive refinishing.

## Revendications

1. Vernis transparent à base d'un solvant, durcissable par UV et thermiquement, contenant :
(A) au moins un poly(méth)acrylate à fonctionnalité polyhydroxy possédant des groupes latéraux (méth)acrylate insaturés greffés,
(B) au moins un uréthane aliphatique à fonctionnalité polyisocyanate, contenant au moins deux groupes (méth)acrylate,
(C) au moins un uréthane aliphatique à fonctionnalité (méth)acrylate, dépourvu de groupes isocyanate,
(D) au moins un composant aliphatique à fonctionnalité hydroxy, à fonctionnalité (méth)acrylate, dépourvu de groupes isocyanate et de groupes uréthane, ayant un poids moléculaire d'au plus 1 000 g/mol et une fonctionnalité (méth)acrylate d'au moins 4,
(E) au moins un polymercaptan aliphatique,
(F) au moins un acide phosphorique ou un acide phosphonique bloqué par une amine, l'amine possédant une valeur pK_{b} ≥ 3 et un point d'ébullition sous pression normale > 100 °C, et
(G) au moins un photoinitiateur choisi dans le groupe constitué par les α-hydroxyalkylphénylcétones et les monoacylphosphinoxydes,
15 à 33 % en poids du composant (A),
5 à 30 % en poids du composant (B),
1 à 9 % en poids du composant (C),
3 à 16 % en poids du composant (D),
0,5 à 25 % en poids du composant (E),
0,009 à 0,1 % en poids du composant (F), et
0,03 à 3,1 % en poids du composant (G), à chaque fois par rapport au poids total du vernis transparent, étant contenus.

2. Vernis transparent à base d'un solvant, durcissable par UV et thermiquement selon la revendication 1, **caractérisé en ce que** le composant (A) est un copolymère de (méth)acrylate constitué par :
(a) un ou plusieurs monomères d'acrylate et/ou de méthacrylate monoinsaturés,
(b) un ou plusieurs monomères aromatiques monoéthyléniquement insaturé, et éventuellement
(c) un ou plusieurs monomères éthyléniquement insaturés différents de (a) et (b),
une partie des monomères (a) portant des groupes hydroxyle et une autre partie des monomères (a) portant des groupes époxy, et, après la réaction de polymérisation, les groupes époxy étant mis en réaction en totalité ou en partie, de préférence en totalité, avec de l'acide acrylique et/ou de l'acide méthacrylique, avec obtention de doubles liaisons carbone-carbone dans l'acide acrylique et/ou l'acide méthacrylique.

3. Vernis transparent à base d'un solvant, durcissable par UV et thermiquement selon la revendication 2, **caractérisé en ce que** la proportion des monomères (a) est de 50 à 70 % en poids et la proportion des monomères (b) est de 30 à 50 % en poids, à chaque fois par rapport au poids total des monomères formant la chaîne principale.

4. Vernis transparent à base d'un solvant, durcissable par UV et thermiquement selon l'une quelconque des revendications 1 à 3, **caractérisé en ce que** la température de transition vitreuse de (A) est d'au moins -10 °C, la température de transition vitreuse étant déterminée par calorimétrie différentielle à balayage selon ISO 11357-2 à un taux de chauffage de 10 °C/minute.

5. Vernis transparent à base d'un solvant, durcissable par UV et thermiquement selon l'une quelconque des revendications 1 à 4, **caractérisé en ce que** (B) contient 2 à 6 groupes (méth)acrylate insaturés.

6. Vernis transparent à base d'un solvant, durcissable par UV et thermiquement selon l'une quelconque des revendications 1 à 5, **caractérisé en ce que** (C) contient 2 à 6 groupes (méth)acrylate insaturés.

7. Vernis transparent à base d'un solvant, durcissable par UV et thermiquement selon l'une quelconque des revendications 1 à 6, **caractérisé en ce que** (D) est choisi dans le groupe constitué par le tétraacrylate de dipentaérythritol et le pentaacrylate de dipentaérythritol.

8. Vernis transparent à base d'un solvant, durcissable par UV et thermiquement selon la revendication 7, **caractérisé en ce que** (D) est le pentaacrylate de dipentaérythritol.

9. Vernis transparent à base d'un solvant, durcissable par UV et thermiquement selon l'une quelconque des revendications 1 à 8, **caractérisé en ce que** le polymercaptan aliphatique (E) est mono- ou polyalcoxylé, présente un poids moléculaire moyen en nombre de 200 à 2 500 g/mol, et comprend 2 à 6 groupes thiol.

10. Vernis transparent à base d'un solvant, durcissable par UV et thermiquement selon l'une quelconque des revendications 1 à 9, **caractérisé en ce que** l'amine du composant (F) est la triéthylène-diamine, et l'acide phosphorique est un acide di(2-éthylhexyl)phosphorique.

11. Vernis transparent à base d'un solvant, durcissable par UV et thermiquement selon l'une quelconque des revendications 1 à 10, **caractérisé en ce que** le photoinitiateur (G) comprend aussi bien une α-hydroxyalkylphénylcétone qu'un monoacylphosphinoxyde.

12. Vernis transparent à base d'un solvant, durcissable par UV et thermiquement selon la revendication 1, **caractérisé en ce que** le composant (A) est un copolymère de (méth)acrylate constitué par :
(a) un ou plusieurs monomères d'acrylate et/ou de méthacrylate monoinsaturés,
(b) un ou plusieurs monomères aromatiques monoéthyléniquement insaturés, et éventuellement
(c) un ou plusieurs monomères éthyléniquement insaturés différents de (a) et (b),
une partie des monomères (a) portant des groupes hydroxyle et une autre partie des monomères (a) portant des groupes époxy, et, après la réaction de polymérisation, les groupes époxy étant mis en réaction en totalité ou en partie, de préférence en totalité, avec de l'acide acrylique et/ou de l'acide méthacrylique, avec obtention de doubles liaisons carbone-carbone dans l'acide acrylique et/ou l'acide méthacrylique,
les composant (B) et (C) contiennent chacun 2 à 6 groupes (méth)acrylate insaturés,
le composant (D) est choisi dans le groupe constitué par le tétraacrylate de dipentaérythritol et le pentaacrylate de dipentaérythritol,
le composant (E) est mono- ou polyalcoxylé, présente un poids moléculaire moyen en nombre de 200 à 2 500 g/mol, et comprend 2 à 6 groupes thiol, et
le composant (G) comprend aussi bien une α-hydroxyalkylphénylcétone qu'un monoacylphosphinoxyde.

13. Système modulaire pour la fabrication du vernis transparent à base d'un solvant, durcissable par UV et thermiquement selon l'une quelconque des revendications 1 à 12, comprenant :
un module (I) comprenant les composants (A), (C), (D), (F) et (G),
un module (II) comprenant le composant (E) et
un module (III) comprenant le composant (B), tous les composants étant tels que définis dans les revendications 1 à 13.

14. Procédé de fabrication d'un vernissage utilisant un vernis transparent selon les revendications 1 à 12, comprenant les étapes suivantes :
(i) l'application à une ou plusieurs reprises du vernis transparent selon l'invention sur un substrat pré-revêtu ou non revêtu,
(ii) l'exposition du film de vernis transparent appliqué ou des films de vernis transparent appliqués à un rayonnement UV pendant une durée de 3 à 10 minutes à une température comprise entre 10 et 120 °C,
(iii) éventuellement le polissage ultérieur du film de vernis transparent exposé à un rayonnement et traité thermiquement et ainsi durci.

15. Procédé de fabrication d'un vernissage selon la revendication 14, selon lequel le rayonnement UV comprend une proportion de rayonnement UV-A et une proportion de rayonnement UV-B, et la proportion de rayonnement UV-B est inférieure à la proportion de rayonnement UV-A.

16. Procédé de fabrication d'un vernissage selon la revendication 14 ou 15, selon lequel la densité de flux énergétique du rayonnement UV-A est de 500 à 1 000 microwatt/cm² à une distance de mesure de 200 cm, et la densité de flux énergétique du rayonnement UV-B est de 100 à 300 microwatt/cm² à une distance de mesure de 200 cm.

17. Utilisation d'un vernis transparent selon les revendications 1 à 12 pour le vernissage de substrats incurvés.

18. Utilisation d'un vernis transparent selon l'une quelconque des revendications 1 à 12 pour le vernissage de réparation automobile.
